# EUROPÄISCHE PATENTANMELDUNG

(11) **EP 1 184 628 A2**
(43) Veröffentlichungstag der Anmeldung: **06.03.2002**
(21) Anmeldenummer: 01117997.5
(22) Anmeldetag: 25.07.2001
(51) Int. Cl.: F24H 1/32

(54) **Wärmetauscher für einen Heizkessel, insbesondere für ein Brennwertgerät**

(30) Priorität: 02.09.2000 DE 10043283
(71) Anmelder: ROBERT BOSCH GMBH, 70442 Stuttgart (DE)
(72) Erfinder: Reisser, Berni, 73274 Notzingen (DE)

(57) **Zusammenfassung**

Es wird ein Wärmetauscher für einen Heizkessel, insbesondere für ein Brennwertgerät, mit einer Vielzahl von nebeneinander angeordneten Platten (10, 20) vorgeschlagen. Die Platten (10, 20) bilden zwischen sich Hohlräume (22) für ein Heizmedium und Zwischenräume (12) für ein Heizgaszug aus. Die Platten (10, 20) sind zu einem Plattenkörper zusammengesetzt, in dem ein Einbauraum (15) für einen Brenner integriert ist.

## Beschreibung

Die Erfindung geht aus von einem Wärmetauscher für einen Heizkessel, insbesondere für ein Brennwertgerät, nach dem Oberbegriff des Anspruchs 1.

### Stand der Technik

Wärmetauscher, die als Heizkessel in Brennwertgeräten eingesetzt sind, sind üblicherweise aus Aluminium-Sandguß hergestellt. Dadurch wird ein kompakter Aufbau des sich über einen weiten Bereich des Heizgasstrom erstreckenden Wärmetauschers erzielt.

Aus der Fachzeitschrift Gas, 11/12 (1999), Seite 10 bis 15, ist bereits ein Wärmetauscher für einen Heizkessel eines Brennwertgerätes bekannt, bei dem die Wärmetauscherflächen aus hochlegierten Edelstahl-Blechen bestehen. Die Edelstahl-Bleche sind zu Wärmetauscherelementen zusammengesetzt, die in sich Wassertaschen für ein Heizmedium einschließen und nach außen eine Kondensationsheizfläche ausbilden. Oberhalb der Wärmetauscherelemente ist eine Brennkammer für einen Brenner angeordnet. Der vom Brenner erzeugt Heizgasstrom strömt zwischen den Kondensationsheizflächen hindurch. Das Heizwasser wird bei dieser Ausführungsform nicht zwangsweise von einer Wassertasche zur anderen geleitet, sondern durchströmt die wasserführenden Wassertaschen parallel.

### Vorteile der Erfindung

Der erfindungsgemäße Wärmetauscher für einen Heizkessel mit den kennzeichnenden Merkmalen des Anspruchs 1 hat den Vorteil, dass ein kompakter Wärmetauscher mit integrierter Brennkammer erzielbar ist. Durch den plattenförmigen Aufbau des Wärmetauschers ist eine kostengünstige Herstellung möglich. Außerdem erlaubt der plattenförmige Aufbau, dass je nach Anforderung die Leistungsgröße skalierbar ist, d. h., dass durch eine entsprechende Anzahl der Platten die Leistung an die Anforderungen angepaßt werden kann.

Vorteilhafte Weiterbildungen der Erfindung gehen aus den Unteransprüchen hervor. Besonders vorteilhaft ist, die Edelstahl-Bleche in Tiefziehtechnik herzustellen und mit einer geeigneten Profilierung bzw. Prägung zu versehen. Dabei werden in die Edelstahl-Bleche für die Wassertaschen Strömungsführungen für das Heizwasser und in die Edelstahl-Bleche für den Heizgaszug Strömungsführungen zur Verwirbelungen des Heizgases eingeprägt.

### Zeichnung

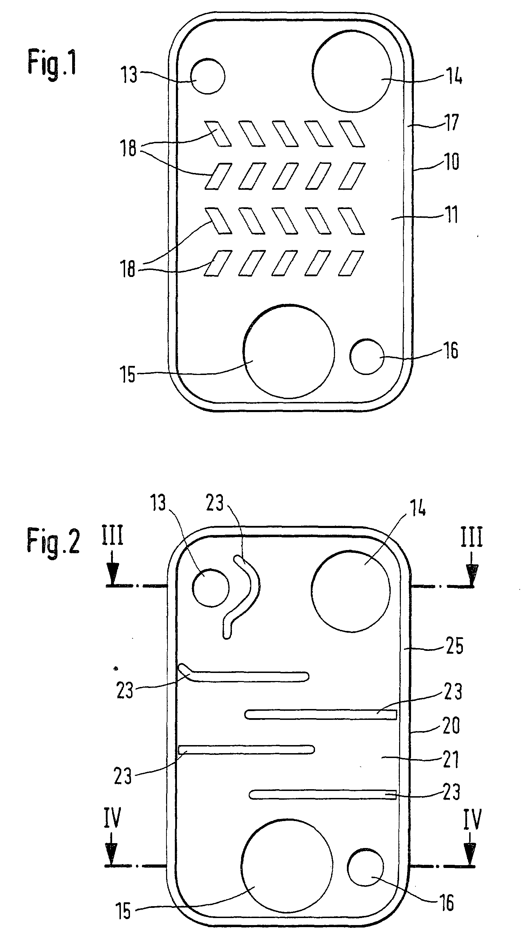

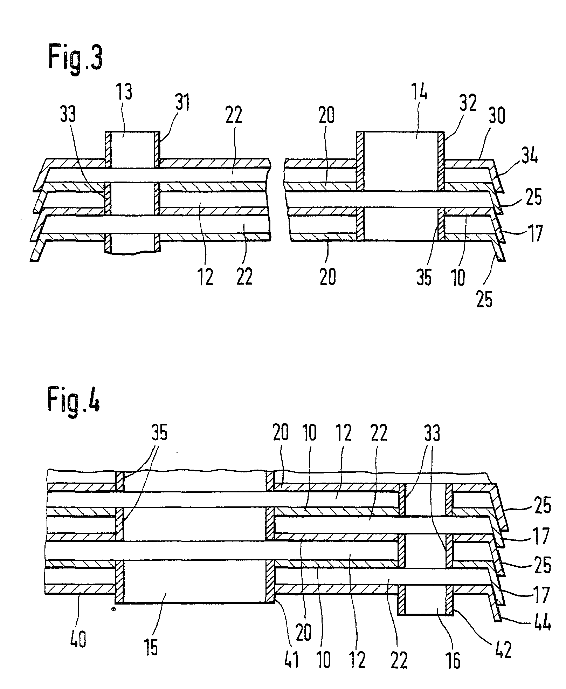

Ein Ausführüngsbeispiel Erfindung ist in der Zeichnung dargestellt und in der nachfolgenden Beschreibung näher erläutert. Figur 1 zeigt eine Wärmetauscherfläche für einen Heizgaszug, Figur 2 eine Wärmetauscherfläche für eine Wassertasche, Figur 3 einen Schnitt nach der Linie III-III in Figur 2 und Figur 4 einen Schnitt nach der Linie IV-IV in Figur 2.

### Ausführungsbeispiel

Figur 1 zeigt eine erste Platte 10 mit einer Wärmetauscherfläche 11 für einen Heizgaszug 12 mit einer ersten Öffnung 13 für einen Wassereinlauf, einer zweiten Öffnung 14 für einen Rauchgassammler, einer dritten Öffnung 15 als Einbauraum für einen nicht dargestellten Brenner und einer vierten Öffnung 16 für einen Wasserauslauf. Die erste Platte 10, die beispielsweise aus einem Edelstahl-Blech besteht, hat eine abgewinkelte Umrandung 17 und ist an der Wärmetauscherfläche 11 mit in den Heizgasszug 12 hinein ragenden Strömungsflächen 18 ausgeführt. Die Strömungsflächen 18 sind bspw. in das Edelstahl-Blech eingeprägt und dienen zu Verwirbelung des Heizgases und somit zur Erhöhung des Wärmeaustauschkoeffizienten.

Eine zweite Platte 20 mit einer Wärmetauscherfläche 21 für eine Wassertasche 22 geht aus Figur 2 hervor, wobei die zweite Platte 20 in gleicher Anordnung wie die erste Platte 10 die Öffnungen 13, 14, 15 und 16 aufweist. Die zweite Platte 20, die ebenfalls aus einem Edelstahl-Blech ausgeführt ist, besitzt eine weitere abgewinkelte Umrandung 25 und hat an der Wärmetauscherfläche 21 für die Wassertaschen 22 Strömungsführungen 23. Die Strömungsführung 23 sind dabei ebenfalls in das Edelstahl-Blech eingeprägt und dienen der Strömungsumlenkung des Heizwassers und tragen somit ebenso zur Erhöhung des Wärmeaustauschkoeffizienten bei.

Ein prinzipieller Aufbau eines Wärmetauschers für einen Heizkessel geht aus den Figuren 3 und 4 hervor. Die Platten 10, 20 sind zu einem Plattenkörper zusammengesetzt, wobei im vorliegenden Ausführungsbeispiels die Platten 10, 20 jeweils abwechselnd hintereinander angeordnet sind. Zusätzlich ist am Anfang eine Frontplatte 40 (Figur 4) und am Ende eine Endplatte 30 (Figur 3) vorgesehen.

In der Endplatte 40 sind beispielsweise eine Flanschanschluss 31 für das Heizwasser und ein Flanschanschluss 32 für den Heizgasabzug angeordnet (Figur 3). In der Frontplatte 40 sind gemäß Figur 4 ein Anschluß 41 für den Einbau des Brenners und ein weiterer Flanschanschluß 42 für den Wasserauslauf des Heizwassers vorgesehen. Die Endplatte 30 und die Frontplatte 40 sind ebenfalls mit angewinkelten Umrandungen 34, 44 ausgeführt. Der Übergang von einer Wassertasche 22 zur nächsten Wassertasche 22 erfolgt mittels Wassertaschen-Verbindungstücken 33 und der Übergang von einem Heizgaszug 12 zum anderen Heizgaszug 12 mittels Heizgaszug-Verbindungsstücken 35.

Die wechselseitige Anordnung der Platten 10 und 20 führt zu einer ebenso wechselseitigen Anordnung von Wassertasche 25 und Heizgaszug 12. Die Wassertaschen 25 und die Heizgaszüge 12 erstrecken sich über die gesamte Ausdehnung des Wärmetauschers. Es ist aber genauso denkbar, eine andere Anordnung von Wassertasche 25 und Heizgaszug 12 zu realisieren.

Die Anordnung der Platten 10, 20 mit der Frontplatte 40 und der Endplatte 30 überlappen sich gemäß Figur 3 und 4 mit ihren abgewinkelten Umrandungen 17, 25, 34, 44. Die so zu einem Stapel zusammengesetzten Platten 10, 20-mit der Frontplatte 40 und der Endplatte 30 werden entlang der abgewinkelten Umrandung 17, 25, 34, 44 und im Bereich der Öffnungen bzw. der Verbindungstücke 33, 35 durch ein geeignetes Lötverfahren dicht verbunden, so dass ein kompakter, geschlossener Plattenkörper entsteht. Der Abzug des Heizgases erfolgt hierbei über die Öffnung 14 für den Rauchgassammler.

## Patentansprüche

1. Wärmetauscher für einen Heizkessel, insbesondere für ein Brennwertgerät, mit einer Vielzahl von nebeneinander angeordneten Platten, wobei die Platten zwischen sich Hohlräume für ein Heizmedium und Zwischenräume für einen Heizgaszug ausbilden, **dadurch gekennzeichnet, dass** die Platten (10, 20) zu einem Plattenkörper zusammengesetzt sind, in dem ein Einbauraum (15) für einen Brenner integriert ist.

2. Wärmetauscher nach Anspruch 1, **dadurch gekennzeichnet, dass** sich der Einbauraum (15) im Wesentlichen quer durch den Plattenkörper erstreckt

3. Wärmetauscher nach Anspruch 1, **dadurch gekennzeichnet, dass** die ausgebildeten Hohlräume (22) für das Heizmedium und die Zwischenräume (12) für das Heizgas abwechselnd nebeneinander liegend angeordnet sind.

4. Wärmetauscher nach Anspruch 1, **dadurch gekennzeichnet, dass** in die eine Platte (10) Strömungsflächen (18) für das Heizgas und in die andere Platte (20) Strömungsflächen (23) für das Heizmedium eingebracht sind.

5. Wärmetauscher nach Anspruch 1, **dadurch gekennzeichnet, dass** der Plattenkörper eine Frontplatte 40 und/oder ein Endplatte (30) mit Anschlüssen (31, 32, 42) für das Heizmedium und/oder für einen Heizgasabzug aufweisen.
